# FASCICULE DE BREVET EUROPEEN

(11) **EP 3 077 183 B1**
(45) Date de publication et mention de la délivrance du brevet: **17.02.2021**
(21) Numéro de dépôt: 14824897.4
(22) Date de dépôt: 25.11.2014
(51) Int. Cl.: B29C 70/44, B30B 1/00, B29C 43/10, B29C 43/32, B29C 43/36

(54) **PROCÉDÉ D'IMPRÉGNATION D'UNE PRÉFORME FIBREUSE**
VERFAHREN ZUM IMPRÄGNIEREN EINER FASERIGEN ROHFORM
METHOD FOR IMPREGNATION OF A FIBROUS PREFORM

(30) Priorité: 04.12.2013 FR 1362102
(43) Date de publication de la demande: 12.10.2016
(73) Titulaire: Safran Aircraft Engines, 75015 Paris (FR); SAFRAN, 75015 Paris (FR)
(72) Inventeur: HENRIO, Philippe, F-91090 Lisses (FR); GODON, Thierry, F-77550 Moissy-Cramayel Cedex (FR)
(74) Mandataire: Cabinet Beau de Loménie
(86) Numéro de dépôt international: PCT/FR2014/053032
(87) Numéro de publication internationale: WO 2015/082801

(56) Documents cités:
- EP-A1- 2 221 167
- DE-A1-102009 039 116
- US-A- 5 820 894
- US-B2- 7 866 969

## Description

### Arrière-plan de l'invention

L'invention concerne un procédé d'imprégnation d'une préforme fibreuse par une composition d'imprégnation.

On connait le procédé « poly-flex » dans lequel une préforme fibreuse est drapée sur un outillage comportant une surface ayant le profil désiré du produit final. La préforme est ensuite couverte par une membrane imperméable déformable et de la résine est injectée entre la membrane et la préforme. De l'autre côté de la membrane, une pression isostatique est exercée sur la membrane par un fluide lequel engendre une déformation de la face de la membrane située en regard de la préforme. Ce fluide force la résine entre les fibres et maintient une pression durant la phase de la cuisson de la résine. Un inconvénient du procédé « poly-flex » est qu'il peut ne permettre de maitriser le profil et la définition de la surface de la pièce à fabriquer que d'un seul côté de la pièce. En effet, la surface de la pièce obtenue située du côté de la membrane peut être plus rugueuse et de profil non maîtrisé. Le procédé « poly-flex » peut, par conséquent, ne pas s'avérer entièrement satisfaisant pour fabriquer des aubes de turbomachine. Le procédé « poly-flex » est décrit dans US 7,866,969 B2.

On connait aussi le procédé de moulage par transfert de résine (« RTM ») dans lequel l'outillage comporte deux demi-coquilles qui, posées l'une sur l'autre, confinent une cavité. La préforme fibreuse est insérée dans la cavité entre les deux demi-coquilles puis est injectée avec de la résine. La polymérisation de la résine est réalisée en maintenant fermées les deux demi-coquilles. Un inconvénient de ce procédé est lié au retrait de la résine lors de sa réticulation, ce qui peut engendrer une perte de pression à l'intérieur de la cavité et la formation de microporosités qui peuvent affecter la résistance mécanique de la pièce obtenue. Par ailleurs, dans le procédé de moulage par transfert de résine (« RTM »), l'imprégnation de la préforme par la résine peut ne pas être complète. En effet, dans ce procédé, la résine est injectée à des points distincts et doit traverser la préforme fibreuse afin d'infiltrer l'intégralité de la préforme, ce qui peut conduire à la non-imprégnation de certaines zones de la préforme.

On connait aussi US 5,382,150 qui décrit un procédé dans lequel un empilage de stratifiés pré-imprégnés est consolidé entre deux demi-coquilles. Le procédé décrit dans US 5,382,150 comporte, en outre, une étape de cuisson en autoclave qui peut s'avérer couteuse.

On connait encore US 2011/0195230 qui décrit la cuisson d'un stratifié.

Il existe donc un besoin pour disposer d'un nouveau procédé permettant de maitriser le profil et la définition de deux faces opposées d'une préforme fibreuse imprégnée.

Il existe aussi un besoin pour disposer d'un nouveau procédé permettant de maitriser le profil et la définition de deux faces opposées d'une pièce en matériau composite comportant une préforme fibreuse densifiée par une matrice.

Il existe aussi un besoin pour disposer d'un nouveau procédé permettant de fabriquer des pièces en matériau composite présentant une microporosité réduite.

### Objet et résumé de l'invention

A cet effet, l'invention propose un procédé d'imprégnation d'une préforme fibreuse par une composition d'imprégnation, conformément à la revendication 1.

Par « support rigide », il faut comprendre que le support présente une rigidité suffisante pour ne pas se déformer lors de la mise en œuvre du procédé selon l'invention. Le support rigide confère ainsi sa forme à la face de la préforme imprégnée située en regard dudit support.

Par ailleurs, la paroi est configurée pour que sa face située en regard de la préforme fibreuse conserve sa forme durant l'imprégnation de la préforme fibreuse par la composition d'imprégnation suite à l'application du fluide. En outre, la paroi est configurée pour que sa face située en regard de la préforme fibreuse conserve sa forme lors de son appui sur la préforme fibreuse imprégnée de composition d'imprégnation.

Ainsi, la paroi permet de conférer sa forme à la face de la préforme fibreuse imprégnée située en regard de la paroi.

La présente invention permet ainsi avantageusement d'obtenir des préformes fibreuses imprégnées par une composition d'imprégnation tout en maîtrisant la définition de deux surfaces opposées de ladite préforme imprégnée. Dans la présente invention, le support rigide et la paroi constituent deux coquilles de moulage pour la préforme imprégnée. Le support rigide et la paroi présentent, en effet, chacun une rigidité suffisante pour conférer leur forme à la préforme fibreuse imprégnée ainsi qu'à la pièce obtenue après densification de la préforme. En particulier, la paroi présente une rigidité suffisante afin que sa face située en regard de la préforme fibreuse conserve sa forme lors de l'application du fluide.

Par ailleurs, l'application du fluide conduisant à un maintien de la pression exercée sur la paroi lors de l'imprégnation permet avantageusement de diminuer le risque d'une imprégnation incomplète de la préforme.

Une fois l'imprégnation réalisée, la face de la préforme fibreuse imprégnée située en regard de la paroi et la face de la préforme fibreuse imprégnée située en regard du support rigide peuvent ou non avoir la même forme.

Dans un exemple de réalisation, la paroi peut être comprimée du fait de l'application du fluide alors que sa face située en regard de la préforme fibreuse conserve sa forme. La compression de la paroi peut avantageusement être élastique. La compression de la paroi peut, par exemple, résulter en une diminution de l'épaisseur de la paroi inférieure ou égale à 0,1 %.

L'épaisseur de la paroi est, sauf mention contraire, définie comme la plus petite dimension transversale de la paroi.

En variante, la paroi est telle qu'elle n'est pas comprimée suite à l'application du fluide. Ainsi, dans un exemple de réalisation, la paroi peut ne subir aucune déformation suite à l'application du fluide.

Dans un exemple de réalisation, la paroi peut être sous la forme d'une membrane, à laquelle sont fixés, par exemple collés, un ou plusieurs éléments rigidifiants. Les éléments rigidifiants peuvent être présents d'un seul côté de la membrane ou, en variante, des deux côtés de la membrane. Les éléments rigidifiants peuvent être présents du côté de la chambre et/ou du côté opposé à la chambre. Les éléments rigidifiants peuvent par exemple se présenter sous la forme d'un ensemble de fibres de renfort, les fibres de renfort comportant par exemple un métal, les fibres de renfort étant par exemple en acier.

La paroi peut, de préférence, présenter un module d'Young compris entre 1 GPa et 250 GPa, de préférence entre 50 GPa et 200 GPa.

L'épaisseur de la paroi peut, par exemple, être comprise entre 0,5 mm et 50 mm.

Dans un exemple de réalisation, la paroi peut comporter, notamment être constituée de, un matériau choisi parmi : les composés métalliques, par exemple l'acier, les métaux, par exemple l'aluminium, les matériaux composites à résine thermodurcissable ou résine thermoplastique ou résine céramique (i.e. résine chargée d'une poudre céramique), les résines organiques renforcées ou non, thermodurcissables ou thermoplastiques, les céramiques, par exemple l'oxyde d'alumine, les matériaux solides sous la forme de mousses et leurs mélanges.

Les matériaux utilisés pour constituer la paroi sont bien entendus aptes à une utilisation dans le cadre du procédé selon l'invention, notamment compatibles en température avec la mise en œuvre du procédé selon l'invention.

Dans un exemple de réalisation, la paroi peut être constituée d'un seul matériau. En variante, la paroi peut comporter une pluralité de matériaux différents.

Dans un exemple de réalisation, le procédé peut comporter, avant l'étape a), une étape d'injection de la composition d'imprégnation dans la chambre.

Dans un exemple de réalisation, la composition d'imprégnation peut avoir été injectée dans la chambre après placement de la préforme fibreuse sur le support et la composition d'imprégnation peut avoir été injectée entre la préforme fibreuse et la paroi.

Dans un exemple de réalisation, la préforme fibreuse peut ne pas être imprégnée par la composition d'imprégnation avant l'application du fluide. Dans ce cas, l'application du fluide permet de réaliser une imprégnation partielle ou complète de la préforme fibreuse par la composition d'imprégnation.

En variante, la préforme fibreuse peut déjà être partiellement imprégnée par la composition d'imprégnation avant l'application du fluide. Dans ce cas, l'application du fluide permet d'augmenter l'imprégnation de la préforme fibreuse par la composition d'imprégnation et, par exemple, de réaliser une imprégnation complète de la préforme fibreuse par la composition d'imprégnation.

Ainsi, après application du fluide, l'imprégnation de la préforme fibreuse par la composition d'imprégnation peut être partielle ou complète.

La préforme fibreuse peut être de toute sorte. La préforme fibreuse peut, par exemple, être une préforme fibreuse tissée, par exemple une préforme fibreuse tissée 3D.

Des fibres en céramique, par exemple en carbure de silicium (SiC), d'oxyde d'alumine et/ou des fibres en carbone, verre ou aramide peuvent, par exemple, être présentes dans la préforme fibreuse.

Dans un exemple de réalisation, la composition d'imprégnation peut, avant l'application du fluide, se superposer à la préforme fibreuse sur au moins la moitié de la longueur de la préforme fibreuse. Ainsi, la composition d'imprégnation peut, avant l'application du fluide, se superposer à la préforme fibreuse sur au moins 50 %, de préférence au moins 75 %, de préférence sensiblement la totalité, de la longueur de la préforme fibreuse.

Sauf indication contraire, la longueur de la préforme fibreuse correspond à sa plus grande dimension.

Le fait que la composition d'imprégnation se distribue sur la majorité de la longueur de la préforme permet avantageusement de réaliser l'infiltration de la préforme par une superficie importante et, par conséquent, d'obtenir une imprégnation améliorée notamment par rapport au procédé de moulage par transfert de résine (« RTM »). Par ailleurs, cela permet l'emploi de résines relativement visqueuses et éventuellement de résines thermoplastiques telles que la polyétheréthercétone (« PEEK ») pour réaliser l'imprégnation, ce qui permet avantageusement de réduire le temps de fabrication.

La composition d'imprégnation peut, par exemple, être une résine, par exemple une résine thermodurcissable, par exemple une résine époxyde, bismaléimide, polyimide, polyester ou vinyle-ester.

En variante, la composition d'imprégnation peut être une barbotine céramique c'est-à-dire une poudre céramique présente dans une solution aqueuse, la poudre comportant par exemple de l'oxyde d'alumine.

Le fluide peut, de préférence, être un liquide. Le fluide peut être différent de la composition d'imprégnation. Le fluide appliqué sur la paroi peut, de préférence, ne pas entrer en contact avec la composition d'imprégnation. Le fluide appliqué sur la paroi peut, de préférence, ne pas pénétrer dans la chambre.

Le fluide peut, par exemple, être un liquide choisi parmi : l'eau, les huiles, par exemple les huiles organiques ou les huiles de silicone, et leurs mélanges.

En variante, le fluide peut être un gaz sous pression, lequel est, par exemple, choisi parmi : l'air comprimé ou l'azote.

Dans un exemple de réalisation, la structure peut, en outre, comporter une membrane imperméable recouvrant la paroi, et la paroi peut être située entre la chambre et la membrane imperméable, et le fluide peut être appliqué sur la membrane imperméable du côté opposé à la chambre.

Dans un exemple de réalisation, la membrane imperméable peut recouvrir la totalité de la paroi.

La membrane imperméable est imperméable au fluide appliqué. La membrane imperméable peut être flexible. En d'autres termes, l'application du fluide sur la membrane imperméable peut permettre de déformer la membrane imperméable afin qu'elle prenne la forme de la paroi.

De préférence, la membrane imperméable peut comporter, notamment être constituée de, un matériau choisi parmi : les silicones renforcés ou non, les polymères thermoplastiques, par exemple le polyamide, le polytéréphtalate d'éthylène (PET), le téflon® (PTFE) ou le polyimide, et leurs mélanges.

La membrane imperméable peut être monocouche ou en variante être multicouche. La(les) couche(s) constituant la membrane imperméable peuvent être sous la forme d'un film. La membrane imperméable peut être constituée d'un seul matériau. En variante, la membrane imperméable peut comporter une pluralité de matériaux différents. Dans un exemple de réalisation, la membrane imperméable est sous la forme d'un feuillard métallique, comportant par exemple du titane, le feuillard peut par exemple présenter une épaisseur de plusieurs dixièmes de mm.

Dans un exemple de réalisation, la membrane imperméable peut déjà être au contact de la paroi avant même l'application du fluide. En variante, la membrane imperméable est mise au contact de la paroi suite à l'application du fluide. En variante encore, une couche intermédiaire peut être présente entre la paroi et la membrane imperméable empêchant un contact entre paroi et membrane imperméable.

Comme mentionné plus haut pour la préforme imprégnée, le support rigide permet de conférer sa forme à la face de la pièce située en regard dudit support. De même, la paroi permet de conférer sa forme à la face de la pièce située en regard de la paroi. En effet, la paroi est configurée pour que sa face située en regard de la préforme fibreuse conserve sa forme durant l'étape de densification. La paroi et le support rigide font donc office de coquilles de moulage permettant de maitriser le profil de deux faces opposées de la pièce.

La face de la pièce obtenue située en regard de la paroi et la face de la pièce obtenue située en regard du support rigide peuvent ou non avoir la même forme.

Dans un exemple de réalisation, la densification peut être réalisée alors que la pression exercée, du fait de l'application du fluide, par la paroi sur la préforme imprégnée est maintenue.

Le maintien d'une pression isostatique par la paroi lors de la densification permet avantageusement d'éviter la formation de porosités par précipitation d'une phase gazeuse dans la composition d'imprégnation et, par conséquent, d'augmenter la résistance mécanique de la pièce obtenue.

Par exemple, la pièce peut constituer une aube de turbomachine, de préférence une aube de soufflante.

La densification de la préforme fibreuse imprégnée peut être réalisée par cuisson de la composition d'imprégnation. Avantageusement, la cuisson de la composition d'imprégnation peut ne pas être conduite au sein d'un autoclave.

Le fait d'éviter de réaliser la cuisson au sein d'un autoclave permet avantageusement de diminuer le coût de mise en œuvre de l'étape de densification.

La présente divulgation également un dispositif pour la mise en œuvre d'un procédé tel que défini plus haut, le dispositif comportant :
- une structure comportant une chambre définie entre un support rigide et une paroi, la paroi ayant une face située en regard du support rigide, la chambre définissant un volume interne dans lequel une préforme fibreuse imprégnée d'une composition d'imprégnation précurseur de matrice est destinée à être présente, la chambre étant configurée pour subir un traitement thermique permettant de densifier la préforme fibreuse, et
- un dispositif d'injection de fluide configuré pour appliquer un fluide sur la paroi du côté opposé à la chambre,
le dispositif étant configuré pour que l'application du fluide sur la paroi du côté opposé à la chambre ne modifie pas la forme de la face de la paroi située en regard du support rigide et génère une pression suffisante sur la paroi pour déplacer celle-ci vers le support et réduire le volume interne de la chambre.

Dans un exemple de réalisation, le dispositif d'injection de fluide peut être configuré pour appliquer un liquide sur la paroi du côté opposé à la chambre.

Dans un exemple de réalisation, la structure peut, en outre, comporter une membrane imperméable recouvrant la paroi, et la paroi peut être située entre la chambre et la membrane imperméable, et le dispositif d'injection de fluide peut être configuré pour appliquer le fluide sur la membrane imperméable du côté opposé à la chambre.

Dans un exemple de réalisation, le dispositif peut, en outre, comporter un organe de chauffage configuré pour réaliser un traitement thermique de la composition d'imprégnation permettant de densifier la préforme fibreuse.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente, de manière schématique et partielle, la préforme fibreuse destinée à être imprégnée selon le procédé de l'invention,
- la figure 2 représente, de manière schématique et partielle, l'assemblage selon la figure 1 après injection de la composition d'imprégnation,
- la figure 3 représente, de manière schématique et partielle, l'assemblage selon la figure 2 après application du fluide,
- la figure 4 représente, de manière schématique et partielle, l'assemblage obtenu après imprégnation de la préforme fibreuse par la composition d'imprégnation, et
- la figure 5 représente, de manière schématique et partielle, la pièce obtenue après cuisson de la composition d'imprégnation.

### Description détaillée de modes de réalisation

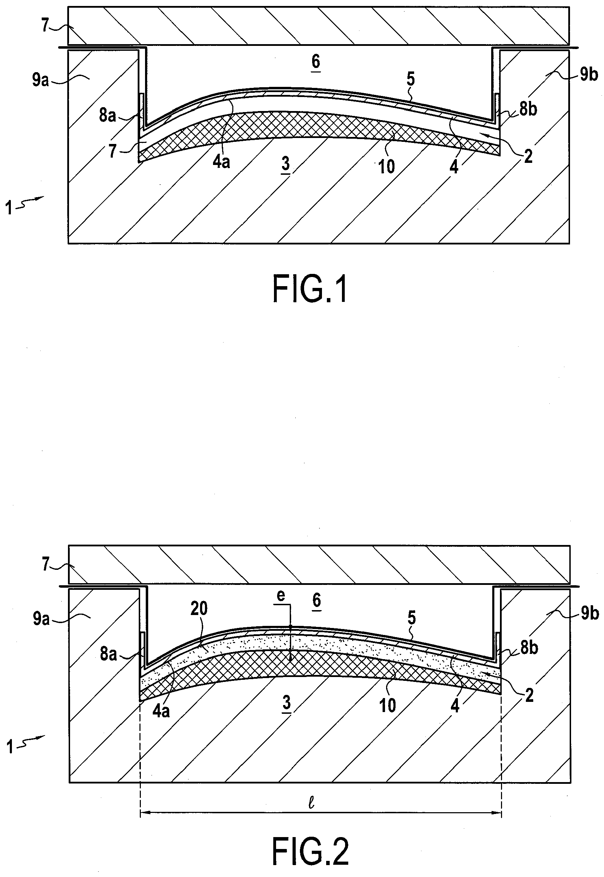

On va décrire, en lien avec les figures 1 à 4, différentes étapes d'un procédé d'imprégnation selon un mode de réalisation de l'invention.

On a représenté à la figure 1 un dispositif 1 comportant un support rigide 3 sur lequel la préforme fibreuse 10 est placée. Une chambre 2 dans laquelle la préforme fibreuse 10 est présente est délimitée par le support rigide 3 et la paroi 4. La chambre 2 est, par ailleurs, délimitée par des parois latérales 9a et 9b du support 3. La chambre 2 comporte, comme illustré, un volume libre 7 située entre la préforme fibreuse 10 et la paroi 4. La paroi 4 présente une face 4a située en regard de la préforme fibreuse 10.

La paroi 4 peut être mise en mouvement par rapport au support 3 lorsqu'une pression suffisante est exercée sur celle-ci. Dans l'exemple illustré, la paroi 4 présente deux extrémités 8a et 8b coopérant avec les parois latérales 9a et 9b. Ces extrémités 8a et 8b en coopération avec les parois latérales 9a et 9b assurent le guidage de la paroi 4 par rapport au support 3. Ces extrémités 8a et 8b peuvent, par exemple, constituer des bords remontants, comme illustré. On ne sort pas du cadre de la présente invention si les extrémités 8a et 8b se présentent sous une autre forme apte à coopérer avec les parois 9a et 9b afin de permettre un déplacement de la paroi 4 par rapport au support 3.

Dans l'exemple illustré, une membrane imperméable 5 recouvre la paroi 4, la paroi 4 étant située entre la chambre 2 et la membrane imperméable 5. La membrane imperméable 5 peut, par exemple, affleurer la paroi 4. La membrane imperméable 5 peut, comme illustré, recouvrir la totalité de la paroi 4. On ne sort pas du cadre de la présente invention si la membrane imperméable 5 est omise.

Le dispositif 1 comporte, en outre, du côté opposé à la chambre 2 une cavité 6 se superposant à la paroi 4. La cavité 6 peut être délimitée par un couvercle 7. Comme détaillé plus bas, la cavité 6 est destinée à être remplie par le fluide lors de la mise en œuvre du procédé d'imprégnation selon l'invention. Le dispositif 1 comporte, en outre, un dispositif d'injection de fluide (non représenté) permettant d'appliquer le fluide dans la cavité 6.

On a représenté à la figure 2 le dispositif de la figure 1 obtenu après réalisation d'une étape d'injection d'une composition d'imprégnation sous la forme d'une résine 20 dans la chambre 2. La résine 20 est, comme illustré, injectée dans le volume libre 7 de la chambre 2. Dans l'exemple représenté, la résine 20 a été injectée après placement de la préforme fibreuse 10 sur le support 3 entre la préforme 10 et la paroi 4. Dans une variante non représentée, la composition d'imprégnation peut être présente entre la préforme fibreuse et le support. Ainsi, la composition d'imprégnation peut, dans une variante non représentée, avoir été introduite dans la chambre avant le placement de la préforme fibreuse par-dessus.

Une fois la résine 20 injectée, celle-ci peut se superposer à la préforme fibreuse 10 sur sensiblement la totalité de la longueur l de la préforme fibreuse 10.

Comme mentionné précédemment, une telle configuration permet avantageusement à la résine 20 d'infiltrer la préforme 10 par une surface importante et donc d'améliorer l'imprégnation.

Par exemple, dans le cas où la pièce à obtenir est une aube de soufflante, la résine 20 peut être située, avant application du fluide, du côté de la face de la préforme fibreuse 10 destinée à former la partie extrados de l'aube.

La couche de résine 20 présente dans la chambre 2 et n'imprégnant pas la préforme fibreuse 10 peut, comme illustré, présenter une épaisseur e.

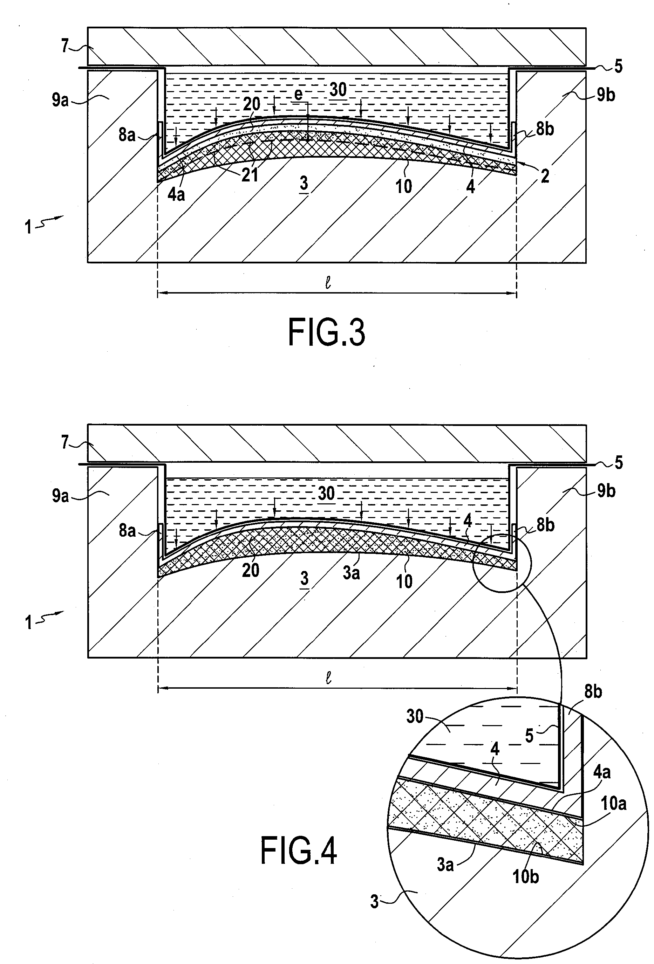

Une fois la résine 20 présente dans la chambre 2, un fluide 30, par exemple un liquide, est injecté dans la cavité 6 par le dispositif d'injection de fluide. L'assemblage obtenu suite à l'apport de fluide 30 dans la cavité 6 est représenté à la figure 3. Le fluide 30 est appliqué sur la paroi 4 du côté opposé à la chambre 2. En d'autres termes, une fois le fluide 30 appliqué sur la paroi 4, la paroi 4 est présente entre la chambre 2 et le fluide 30. Dans l'exemple illustré, le fluide 30 est appliqué sur la paroi 4 une fois l'injection de la résine 20 dans la chambre 2 terminée. Par ailleurs, dans l'exemple illustré, une fois le fluide 30 appliqué, la membrane imperméable 5 est présente entre le fluide 30 appliqué et la paroi 4.

Le fluide 30 appliqué exerce une pression sur la paroi 4 à travers la membrane imperméable 5. La pression isostatique du fluide 30 force la résine 20 à travers la préforme fibreuse 10, déplace la paroi 4 vers le support 3 et pousse la paroi 4 contre la préforme 10.

L'application du fluide 30 ne modifie pas la forme de la paroi 4, celle-ci étant suffisamment rigide pour que sa forme ne soit pas affectée par l'application du fluide 30. Ainsi, l'application du fluide 30 provoque un déplacement de la paroi 4 vers le support 3 sans modification de la forme de la paroi 4. En particulier, la face 4a de la paroi 4 située en regard de la préforme fibreuse 10 conserve sa forme suite à l'application du fluide. Comme illustré, les extrémités 8a et 8b de la paroi 4 se rapprochent du support 3 suite à l'application du fluide 30. La paroi 4 présente la même forme durant toute l'étape d'imprégnation de la préforme fibreuse 10 par la résine 20.

Le déplacement de la paroi 4 suite à l'application du fluide 30 engendre une réduction du volume de la chambre 2. Comme illustré, l'épaisseur e de la couche de résine 20 présente dans la chambre 2 et n'imprégnant pas la préforme fibreuse 10 diminue au fur et à mesure du fait de la pression exercée par le fluide 30. En parallèle, le front d'imprégnation 21 de la résine 20 dans la préforme 10 progresse dans l'épaisseur de la préforme 10 du fait de la pression exercée par le fluide 30. Le front d'imprégnation 21 de la résine 20 dans la préforme 10 progresse, comme illustré, dans le sens du déplacement de la paroi 4.

Une fois la préforme 10 complètement imprégnée par la résine 20, on obtient le résultat illustré à la figure 4. Comme mentionné plus haut, le support 3 est suffisamment rigide pour conférer à la face 10b de la préforme imprégnée la forme de la face 3a du support 3 située en regard. La paroi 4 est, quant à elle, suffisamment rigide pour conférer à la face 10a de la préforme imprégnée la forme de la face 4a de la paroi 4 située en regard. Les faces opposées 10a et 10b n'ont pas la même forme, notamment pas la même courbure dans l'exemple illustré.

La figure 4 montre le dispositif 1 lors de la cuisson de la résine 20. La pression isostatique du fluide 30 se propage dans la préforme imprégnée par la résine, la pression exercée par le fluide 30 est maintenue lors de la réticulation de la résine.

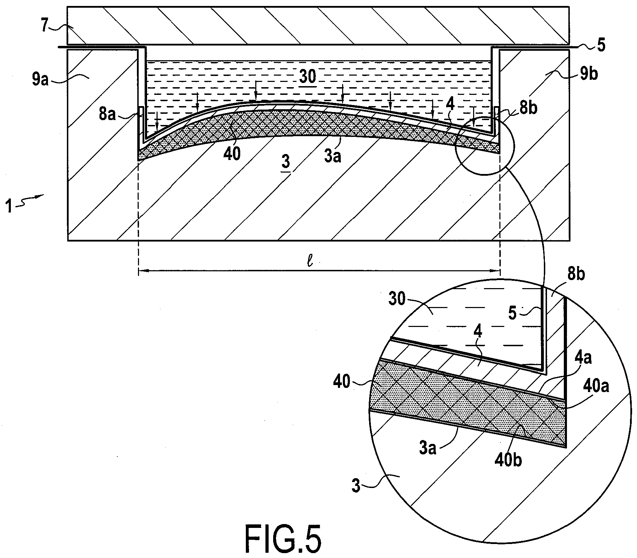

On a représenté à la figure 5 le résultat obtenu après densification d'une préforme fibreuse imprégnée par une résine précurseur de matrice de densification. On obtient, comme représenté, une pièce 40 comportant une préforme fibreuse densifiée par une matrice. Le support 3 est suffisamment rigide pour conférer à la face 40b de la pièce 40 la forme de la face 3a du support 3 située en regard. La paroi 4 est, quant à elle, suffisamment rigide pour conférer à la face 40a de la pièce 40 la forme de la face 4a de la paroi 4 située en regard. Les faces opposées 40a et 40b n'ont pas la même forme, notamment n'ont pas la même courbure, dans l'exemple illustré. Comme illustré, la paroi 4 maintient lors de la cuisson de la résine une pression isostatique à l'aide du fluide 30 s'appuyant sur la paroi 4. Le fluide 30 peut ne pas être affecté par l'étape de densification. En d'autres termes, le fluide 30 peut ne pas changer d'état durant l'étape de densification.

Le dispositif 1 peut comporter un organe de chauffage (non représenté) permettant de réaliser le traitement thermique permettant de transformer la résine en matrice de densification.

La pièce obtenue 40 peut constituer une aube de turbomachine, de préférence une aube de soufflante.

Le procédé selon l'invention permet avantageusement de maitriser la forme des faces opposées 40a et 40b de la pièce 40 obtenue notamment du fait de l'utilisation de la paroi 4 et du support rigide 3.

### Exemples

### Exemple 1 (application d'un liquide)

On place dans une chambre définie entre un support rigide en acier de dimensions 150x150x50 mm³ et une paroi également en acier d'épaisseur égale à 2 mm une préforme fibreuse comportant des fibres de carbone, laquelle est sous la forme d'une plaque de dimensions 100x100x10 mm³.

On injecte ensuite dans la chambre un volume de 40 cm³ de résine époxyde de type PR520.

On applique ensuite sur la paroi du côté opposé à la chambre de l'huile afin d'exercer une pression de 4 bars et réaliser l'imprégnation de la préforme par la résine.

On obtient, après imprégnation, une plaque comportant une teneur volumique en fibres de carbone égale à 60%. La température imposée durant l'imprégnation est de 160°C.

On réalise ensuite une étape de densification de la préforme fibreuse imprégnée par chauffage à 180°C afin de réticuler complètement la résine.

### Exemple 2 (application d'un gaz)

On place dans une chambre définie entre un support rigide en acier de dimensions 150x150x50 mm³ et une paroi également en acier d'épaisseur égale à 2 mm une préforme fibreuse comportant des fibres de carbone, laquelle est sous la forme d'une plaque de dimensions 100x100x10 mm³.

On injecte ensuite dans la chambre un volume de 40 cm³ de résine époxyde de type PR520.

On applique ensuite sur la paroi du côté opposé à la chambre de l'air comprimé afin d'exercer une pression de 4 bars et réaliser l'imprégnation de la préforme par la résine.

On obtient, après imprégnation, une plaque comportant une teneur volumique en fibres de carbone égale à 60%. La température imposée durant l'imprégnation est de 160°C.

On réalise ensuite une étape de densification de la préforme fibreuse imprégnée par chauffage à 180°C afin de réticuler complètement la résine.

L'expression « comportant/contenant un(e) » doit se comprendre comme « comportant/contenant au moins un(e) ».

L'expression « compris(e) entre ... et ... » ou « allant de ... à ... » doit se comprendre comme incluant les bornes.

## Revendications

1. Procédé d'imprégnation d'une préforme fibreuse (10) par une composition d'imprégnation (20), le procédé comportant l'étape suivante :
a) application d'un liquide (30) sur une structure, la structure comportant :
- une chambre (2) dans laquelle une préforme fibreuse (10) à imprégner est présente, la chambre (2) étant définie entre un support rigide (3) sur lequel la préforme fibreuse (10) est placée et une paroi (4), la paroi (4) ayant une face (4a) située en regard de la préforme fibreuse (10), et
- une composition d'imprégnation (20), destinée à imprégner la préforme fibreuse (10), la composition d'imprégnation étant présente dans la chambre (2),
le liquide (30) étant appliqué sur la paroi (4) du côté opposé à la chambre (2), la paroi (4) étant configurée pour que sa face (4a) située en regard de la préforme fibreuse (10) conserve sa forme lors de l'application du liquide (30), le liquide (30) appliqué permettant de créer une pression suffisante pour déplacer la paroi (4) vers le support rigide (3) et imprégner la préforme fibreuse (10) par la composition d'imprégnation (20)
le procédé comportant, avant l'étape a), une étape d'injection de la composition d'imprégnation (20) dans la chambre (2).

2. Procédé selon la revendication 1, **caractérisé en ce que** la composition d'imprégnation (20) a été injectée dans la chambre (2) après placement de la préforme fibreuse (10) sur le support (3) et **en ce que** la composition d'imprégnation (20) a été injectée entre la préforme fibreuse (10) et la paroi (4).

3. Procédé selon l'une quelconque des revendications 1 ou 2, **caractérisé en ce que** la composition d'imprégnation (20) se superpose, avant l'application du liquide (30), à la préforme fibreuse (10) sur au moins la moitié de la longueur l de la préforme fibreuse (10).

4. Procédé selon l'une quelconque des revendications 1 à 3, **caractérisé en ce que** la structure comporte, en outre, une membrane imperméable (5) recouvrant la paroi (4), et **en ce que** la paroi (4) est située entre la chambre (2) et la membrane imperméable (5), et **en ce que** le liquide (30) est appliqué sur la membrane imperméable (5) du côté opposé à la chambre (2).

5. Procédé de fabrication d'une pièce (40) comportant une préforme fibreuse densifiée par une matrice, **caractérisé en ce qu'**il comporte-les étapes suivantes :
a) réalisation d'un procédé selon l'une quelconque des revendications 1 à 4 afin d'obtenir une préforme fibreuse imprégnée par une composition d'imprégnation précurseur de matrice de densification,
b) densification de la préforme fibreuse (10) imprégnée afin d'obtenir une pièce (40) comportant la préforme fibreuse densifiée par une matrice.

6. Procédé selon la revendication 5, **caractérisé en ce que** la densification est réalisée alors que la pression exercée, du fait de l'application du liquide (30), par la paroi (4) sur la préforme imprégnée est maintenue.

7. Procédé selon l'une quelconque des revendications 5 et 6, **caractérisé en ce que** la pièce (40) constitue une aube de turbomachine.

## Patentansprüche

1. Verfahren zum Imprägnieren einer faserigen Rohform (10) mit einer Imprägnierzusammensetzung (20), wobei das Verfahren den folgenden Schritt aufweist:
a) Auftragen einer Flüssigkeit (30) auf eine Struktur, wobei die Struktur aufweist:
- eine Kammer (2), in welcher eine zu imprägnierende faserige Rohform (10) vorhanden ist, wobei die Kammer (2) zwischen einer starren Unterlage (3), auf welcher die faserige Rohform (10) platziert ist, und einer Wand (4) definiert ist, wobei die Wand (4) eine Fläche (4a) hat, die sich der faserigen Rohform (10) zugewandt befindet, und
- eine Imprägnierzusammensetzung (20), die bestimmt ist, die faserige Rohform (10) zu imprägnieren, wobei die Imprägnierzusammensetzung in der Kammer (2) vorhanden ist,
wobei die Flüssigkeit (30) auf die Wand (4) auf der zur Kammer (2) entgegengesetzten Seite aufgetragen wird, wobei die Wand (4) ausgelegt ist, damit ihre Fläche (4a), die sich der faserigen Rohform (10) zugewandt befindet, ihre Form beim Auftragen der Flüssigkeit (30) beibehält, wobei die aufgetragene Flüssigkeit (30) erlaubt, einen Druck zu erzeugen, der ausreichend ist, um die Wand (4) in Richtung der starren Unterlage (3) zu verlagern und die faserige Rohform (10) mit der Imprägnierzusammensetzung (20) zu imprägnieren,
wobei das Verfahren vor dem Schritt a) einen Einleitungsschritt der Imprägnierzusammensetzung (20) in die Kammer (2) aufweist.

2. Verfahren nach Anspruch 1, **dadurch gekennzeichnet, dass** die Imprägnierzusammensetzung (20) nach dem Platzieren der faserigen Rohform (10) auf der Unterlage (3) in die Kammer (2) eingeleitet wurde und dass die Imprägnierzusammensetzung (20) zwischen der faserigen Rohform (10) und der Wand (4) eingeleitet wurde.

3. Verfahren nach einem der Ansprüche 1 oder 2, **dadurch gekennzeichnet, dass** sich die Imprägnierzusammensetzung (20) vor dem Auftragen der Flüssigkeit (30) auf die faserige Rohform (10) auf mindestens der Hälfte der Länge l der faserigen Rohform (10) legt.

4. Verfahren nach einem der Ansprüche 1 bis 3, **dadurch gekennzeichnet, dass** die Struktur ferner eine undurchlässige Membran (5) aufweist, die die Wand (4) bedeckt, und dass sich die Wand (4) zwischen der Kammer (2) und der undurchlässigen Membran (5) befindet und dass die Flüssigkeit (30) auf die undurchlässige Membran (5) auf der Seite gegenüber der Kammer (2) aufgetragen wird.

5. Verfahren zum Herstellen eines Teils (40), aufweisend eine durch eine Matrix verdichtete faserige Rohform, **dadurch gekennzeichnet, dass** es die folgenden Schritte aufweist:
a) Durchführen eines Verfahrens nach einem der Ansprüche 1 bis 4, um eine mit einer Imprägnierzusammensetzung als Vorläufer der Verdichtungsmatrix imprägnierte faserige Rohform zu erhalten,
b) Verdichten der imprägnierten faserigen Rohform (10), um ein Teil (40) zu erhalten, das die durch eine Matrix verdichtete faserige Rohform aufweist.

6. Verfahren nach Anspruch 5, **dadurch gekennzeichnet, dass** die Verdichtung durchgeführt wird, während der aufgrund des Auftragens der Flüssigkeit (30) ausgeübte Druck durch die Wand (4) auf die Rohform beibehalten wird.

7. Verfahren nach einem der Ansprüche 5 und 6, **dadurch gekennzeichnet, dass** das Teil (40) eine Turbomaschinenschaufel darstellt.

## Claims

1. A method of impregnating a fiber preform (10) with an impregnation composition (20), the method including the following step:
a) applying a liquid (30) on a structure, the structure comprising:
- a chamber (2) in which a fiber preform (10) for impregnating is present, the chamber (2) being defined between a rigid support (3) on which the fiber preform (10) is placed and a wall (4), the wall (4) having a face (4a) situated facing the fiber preform (10); and
- an impregnation composition (20), for impregnating the fiber preform (10), the impregnation composition being present in the chamber (2);
the liquid (30) being applied against the wall (4) on its side opposite from the chamber (2), the wall (4) being configured so that its face (4a) situated facing the fiber preform (10) conserves its shape during the application of the liquid (30), the applied liquid (30) enabling sufficient pressure to be created to move the wall (4) towards the rigid support (3) and impregnate the fiber preform (10) with the impregnation composition (20),
the method including, prior to step a), a step of injecting the impregnation composition (20) into the chamber (2).

2. A method according to claim 1, **characterized in that** the impregnation composition (20) is injected into the chamber (2) after placing the fiber preform (10) on the support (3), and **in that** the impregnation composition (20) is injected between the fiber preform (10) and the wall (4).

3. A method according to any one of claims 1 or 2, **characterized in that**, prior to applying the liquid (30), the impregnation composition (20) is superposed on the fiber preform (10) over at least half of the length ℓ of the fiber preform (10).

4. A method according to any one of claims 1 to 3, **characterized in that** the structure also includes an impermeable membrane (5) covering the wall (4), and **in that** the wall (4) is situated between the chamber (2) and the impermeable membrane (5), and **in that** the liquid (30) is applied against the impermeable membrane (5) on its side opposite from the chamber (2).

5. A method of fabricating a part (40) comprising a fiber preform densified by a matrix, the method being **characterized in that** it includes the following steps:
a) performing a method according to any one of claims 1 to 4 to obtain a fiber preform impregnated by an impregnation composition that is a densification matrix precursor,
b) densifying the fiber preform (10) that has been impregnated to obtain a part (40) comprising the fiber preform densified by a matrix.

6. A method according to claim 5, **characterized in that** the densification is performed while maintaining the pressure exerted by the wall (4) on the impregnated preform as a result of the application of the liquid (30) .

7. A method according to claim 5 or claim 6, **characterized in that** the part (40) constitutes a turbine engine blade.
